# EUROPEAN PATENT APPLICATION

(11) **EP 0 995 987 A2**
(43) Date of publication of application: **26.04.2000**
(21) Application number: 99203371.2
(22) Date of filing: 14.10.1999
(51) Int. Cl.: G01N 27/36, G01N 27/30

(54) **Ph sensor assembly**

(30) Priority: 22.10.1998 GB 9823011
(71) Applicant: EASTMAN KODAK COMPANY, Rochester, New York 14650 (US)
(72) Inventor: Edwards, Stephen, Harrow, HA1 4TY (GB); McIntyre, Stephanie, Harrow, HA1 4TY (GB); Birch, Brian, Harrow, HA1 4TY (GB); Bell, Andrew, Harrow, HA1 4TY (GB); Holland, Diane, Harrow, HA1 4TY (GB); Fall, Martyn, Harrow, HA1 4TY (GB); Groves, Jan, Harrow, HA1 4TY (GB); Pittson, Robin, Harrow, HA1 4TY (GB)
(74) Representative: Barker, Brenda

(57) **Abstract**

A planar pH sensor assembly has a planar substrate 2 on which is deposited an electrically conductive layer 4. A layer of soft insulating material 6 is deposited over the conductive layer. The insulating layer 6 comprises a high resistance binder in which particles 10 of pH glass have been mixed. The top layer of glass particles 10 are exposed above the surface of the insulating layer 6 and at least one current path through the layer 6 is provided by point to point contact of the particles 10.

## Description

### Field of the Invention

This invention relates to a solid state pH sensor assembly.

### Background of the Invention

The most widely used technique to measure values of pH is to use a glass pH electrode in conjunction with a reference electrode. Conventional pH electrodes comprise a glass sheath and bulb containing a solution of potassium chloride and a pH buffer, together with a dipped silver chloride wire. This fill solution, together with a pH sensing membrane formed in the glass sheath, define the potential that is measured to determine the pH of the solution in which the sensor is immersed. The potential produced is the algebraic sum of the potentials developed across the glass membrane, indicative of the sampled pH, and the potential of an internal reference electrode, usually a coated silver wire, and the external reference electrode

### Problem to be solved by the Invention

It is known that a conventional glass bulb pH electrode can have a maximum glass thickness of 100µ to 200µ. The electrodes are very fragile and difficult to manufacture. They must also be frequently calibrated. This means that a skilled operator is required to take pH measurements.

The aim of the invention is to provide a device for measuring pH values which is cheap to manufacture and which can be mass produced with small batch variations. Ideally the device will be able to be used by an unskilled operator.

### Summary of the Invention

According to the present invention there is provided a planar pH sensor assembly comprising a planar substrate having a first surface and a second surface, an electrically conductive layer formed on the first surface of the substrate, an insulating layer formed on the surface of the electrically conductive layer remote from the substrate, the insulating layer covering the electrically conductive layer, and electrical contact means in connection with the electrically conductive layer for connecting the sensor assembly to a meter device, the insulating layer comprising a high resistance binder interspersed with a plurality of particles of pH glass, a number of particles remaining substantially uncoated and partially exposed above the surface of the insulating layer, at least one current path through the insulating layer being provided by point to point contact of the particles.

Preferably there is a solid electrolyte layer provided between the insulating layer and the electrically conductive layer.

The invention further provides methods of manufacturing a pH sensor assembly.

### Advantageous Effect of the Invention

Sensors according to the invention are much cheaper to manufacture than conventional glass bulb pH electrodes. The sensors can be mass produced and calibrated at manufacture. They are thus much simpler to use and can be used by unskilled operators.

### Brief Description of the Drawings

A sensor assembly in accordance with the invention will now be described, by way of example, with reference to the accompanying drawings, in which:
Figure 1 is a schematic view of a preferred embodiment of a planar pH sensor assembly according to the invention; and
Figure 2 shows a pH sensor in connection with a measurement device;

### Detailed Description of the Invention

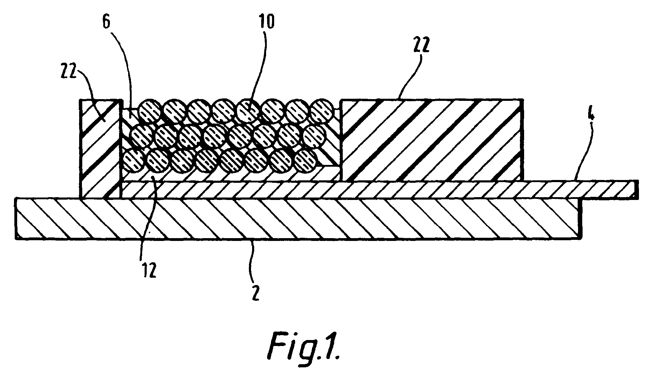

Referring to figure 1, an electrically conductive layer 4 is deposited on a substrate 2. The conductive layer 4 is formed from a soft material such as indium or gold. A solid electrolyte ion conductive layer 12 is deposited over part of the electrically conductive layer. A layer of soft insulating material 6 is deposited over the solid electrolyte layer. The thickness of the insulating layer is in the region of 200µ.

The insulating layer 6 comprises a high resistance binder in which particles 10 of pH glass have been mixed. The particles 10 have a linear dimension of between 5µ to 150µ, preferably 10µ. There must be sufficient glass particles 10 within the binder to ensure that a top layer of uncoated parts of the particles 10 are exposed above the surface of the insulating layer 6. This is to ensure that the uncoated particles form a hydrated swollen layer when in contact with an aqueous sample to allow pH dependent potential process to take place. In addition, at least one current path through the insulating layer must be provided by point to point contact of the particles. A glass to binder ratio of 60 - 85% is the preferred range. This range provides a suitable aspect ratio to allow partially uncoated particles to appear at the surface of the insulating layer 6.

A suitable insulating dielectric 22 is deposited over the surface of the sensor excepting a window 14 through which part of the pH sensitive surface is exposed.

It will be understood that figure 1 is a schematic only and that the particles 10 are in contact as explained above.

Electrical contacts are provided in connection with the electrically conductive layer 6 for contact with a meter device 18.

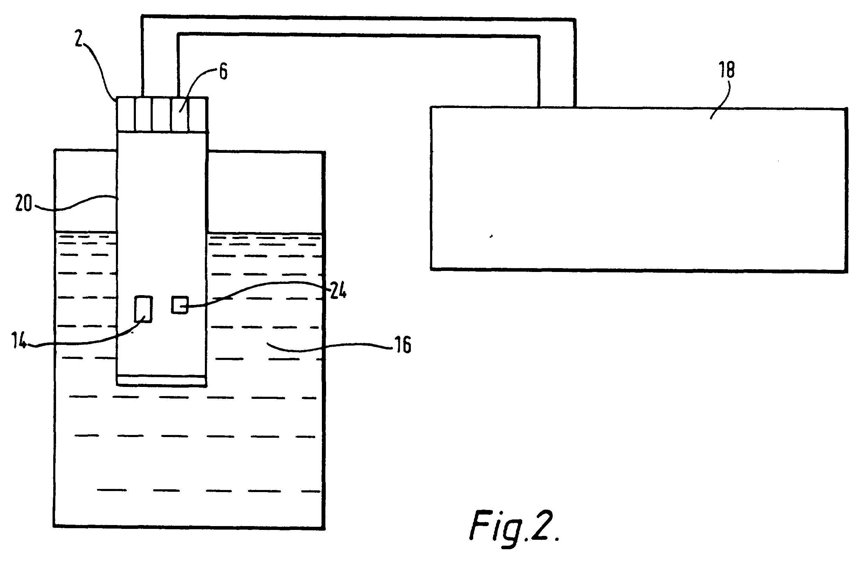

Figure 2 shows the assembly in use. The sensor assembly 20 is immersed in sample 16. Signals from the window 14 and the reference electrode 24 are supplied to the pH meter device 18.

The binder containing the glass particles is coated onto the planar substrate. The substrate can be made by any known method, such as moulding. The substrate can be alumina, forsterite, zirconia or coated steel. The preferred thickness of the substrate is 0.1mm to 2mm. The unsolidified binder matrix can also be deposited in a pattern onto and over suitable solid conductor electrodes. These electrodes may themselves be deposited as a pattern onto a suitable solid substrate. Once the binder has hardened a protective overlay of suitable dielectric material can be deposited over the entire surface except a window through which part of the pH sensitive substance is exposed. A suitable method may be screen printing.

## Claims

1. A planar pH sensor assembly comprising a planar substrate having a first surface and a second surface, an electrically conductive layer formed on the first surface of the substrate, an insulating layer formed on the surface of the electrically conductive layer remote from the substrate, the insulating layer covering the electrically conductive layer, and electrical contact means in connection with the electrically conductive layer for connecting the sensor assembly to a meter device, the insulating layer comprising a high resistance binder interspersed with a plurality of particles of pH glass, a number of particles remaining substantially uncoated and partially exposed above the surface of the insulating layer, at least one current path through the insulating layer being provided by point to point contact of the particles.

2. A planar pH sensor assembly as claimed in claim 1 wherein a solid electrolyte layer is provided between the insulating layer and the electrically conductive layer.

3. A planar pH sensor assembly as claimed in claim 1 or 2 wherein the glass to binder ratio is in the region of 60 to 85%.

4. A planar pH sensor assembly as claimed in claim 1, 2 or 3 wherein the glass particles are in the order of 5µ to 150µ in size.

5. A planar pH sensor assembly as claimed in claim 4 wherein the glass particles are approximately 10 microns in size.

6. A planar pH sensor assembly as claimed in any of claims 1 to 5 wherein the thickness of the insulating layer is approximately 200 microns.

7. A method of manufacturing a pH sensor assembly as claimed in any preceding claim.
